# EUROPEAN PATENT SPECIFICATION

(11) **EP 3 279 790 B1**
(45) Date of publication and mention of the grant of the patent: **11.11.2020**
(21) Application number: 15887804.1
(22) Date of filing: 28.12.2015
(51) Int. Cl.: G06F 3/16, G06F 3/0487, G10L 13/00, G10L 15/10, G10L 15/22

(54) **INFORMATION PROCESSING DEVICE, CONTROL METHOD, AND PROGRAM**
INFORMATIONSVERARBEITUNGSVORRICHTUNG, STEUERUNGSVERFAHREN UND PROGRAMM
DISPOSITIF DE TRAITEMENT D'INFORMATIONS, PROCÉDÉ DE COMMANDE ET PROGRAMME

(30) Priority: 31.03.2015 JP 2015073896
(43) Date of publication of application: 07.02.2018
(73) Proprietor: Sony Corporation, Tokyo 108-0075 (JP)
(72) Inventor: OHMURA, Junki, Tokyo 108-0075 (JP)
(74) Representative: MFG Patentanwälte Meyer-Wildhagen Meggle-Freund Gerhard PartG mbB
(86) International application number: PCT/JP2015/086544
(87) International publication number: WO 2016/157662

(56) References cited:
- JP-A- H01 216 398
- JP-A- H01 216 398
- JP-A- 2006 243 555
- US-A1- 2014 074 483

## Description

### Technical Field

The present disclosure relates to information processing devices, control methods, and programs.

### Background Art

Technologies of performing speech recognition and semantic analysis on speeches from users and responding by voice have been conventionally developed. Specifically, it is possible to perform speech recognition processes within a practical time due to recent progress in speech recognition algorithms and development in computer technologies, and user interfaces (UIs) for smartphones, tablets, and the like that use voice have become popular.

For example, it is possible to respond, by voice, to a question spoken by a user, or it is possible to execute a process corresponding to an instruction spoken by a user, by using an application of a voice UI installed in the smartphone, the tablet terminal, or the like.

For example, Patent Literature 1 listed below discloses a voice conversation control method in which an importance level of contents of a response is considered by a system side to continue or stop the response in the case where a user interrupts a speech while the system is responding (in other words, while the system is outputting speech) in voice conversation with a single user.

In addition, Patent Literature 2 listed below discloses a voice conversation device by which users can easily recognize whose voice is being output when the plurality of users are talking with each other. Patent Literature 3 describes methods and systems related to intelligent interruption handling by digital assistants. A first information provision process is initiated in response to a first speech input. The first information provision process comprises preparing a first response and a second response to the first speech input. After or concurrent with the provision of the first response to the user, but before provision of the second response to the user, an event operable to initiate a second information provision process is detected. The second information provision process is initiated in response to detecting the event. The second information provision process comprises preparing a third response to the event. A relative urgency between the second response and the third response is determined. One of the second response and the third response is provided to the user in an order based on the determined relative urgency.

### Citation List

### Patent Literature

Patent Literature 1: JP 2004-325848 A
Patent Literature 2: JP 2009-261010 A
Patent Literature 3: US 2014/074483 A1

### Disclosure of Invention

### Technical Problem

However, due to its characteristic of responding by outputting speech, the voice UI is assumed to be used in one-to-one conversation between a system and a user, and the voice UI is not assumed to be used in conversation between the system and a plurality of users. Therefore, for example, when it is assumed that the voice UI system is used in a house or a public space, a certain user is likely to occupy the system.

In addition, the technology described in Patent Literature 1 described above is a response system to be used in voice conversation with a single user, and it is difficult to respond to a plurality of user at the same time. In addition, although the technology described in Patent Literature 2 described above relates to a system to be used by a plurality of user, it is not assumed that a plurality of user uses the voice UI that automatically respond to a speech from a user by voice.

Therefore, the present disclosure proposes an information processing device, control method, and program that can improve convenience of a speech recognition system by outputting appropriate responses to respective users when the plurality of users are talking.

### Solution to Problem

According to a first aspect the invention provides an information processing device in accordance with claim 1. According to a second aspect the invention provides a control method in accordance with claim 10. According to a third aspect the invention provides a program in accordance with claim 11. Further aspects of the invention are set forth in the dependent claims, the drawings and the following description of embodiments. According to the present disclosure, there is provided an information processing device including: a response generation unit configured to generate responses to speeches from a plurality of users; a decision unit configured to decide methods of outputting the responses to the respective users on the basis of priorities according to order of the speeches from the plurality of users; and an output control unit configured to perform control such that the generated responses are output by using the decided methods of outputting the responses.

According to the present disclosure, there is provided a control method including: generating responses to speeches from a plurality of users; deciding methods of outputting the responses to the respective users on the basis of priorities according to order of the speeches from the plurality of users; and performing control, by an output control unit, such that the generated responses are output by using the decided methods of outputting the responses.

According to the present disclosure, there is provided a program for causing a computer to function as: a response generation unit configured to generate responses to speeches from a plurality of users; a decision unit configured to decide methods of outputting the responses to the respective users on the basis of priorities according to order of the speeches from the plurality of users; and an output control unit configured to perform control such that the generated responses are output by using the decided methods of outputting the responses.

### Advantageous Effects of Invention

As described above, according to the present disclosure, it is possible to improve convenience of a speech recognition system by outputting appropriate responses to respective users when the plurality of users are talking.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrating an overview of a speech recognition system according to an embodiment of the present disclosure.
[FIG. 2] FIG. 2 is a diagram illustrating an example of a configuration of an information processing device according to the embodiment.
[FIG. 3] FIG. 3 is a flowchart illustrating an operation process of a speech recognition system according to the embodiment.
[FIG. 4] FIG. 4 is a diagram illustrating examples of outputting responses by voice and display to speeches from a plurality of users at the same time according to the embodiment.
[FIG. 5A] FIG. 5A is a diagram illustrating notification indicating stand-by users by using a sub-display according to the embodiment.
[FIG. 5B] FIG. 5B is a diagram illustrating notification indicating stand-by users by using a sub-display according to the embodiment.
[FIG. 6] FIG. 6 is a diagram illustrating an example of saving a display region by displaying an icon indicating a response to a non-target user.
[FIG. 7] FIG. 7 is a diagram illustrating simultaneous responses by using directional voices according to the embodiment.
[FIG. 8] FIG. 8 is a diagram illustrating an example of error display according to the embodiment.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that the description is given in the following order.
1. Overview of speech recognition system according to embodiment of present disclosure
2. Configuration
3. Operation process
4. Response output example
   4-1. Responses by voice and display
   4-2. Simultaneous response using directivity
   4-3. Response through cooperation with external device
   4-4. Response according to state of speaker
   4-5. Response according to contents of speech
   4-6. Error response
5. Conclusion

### <<1. Overview of speech recognition system according to an aspect of present disclosure>>

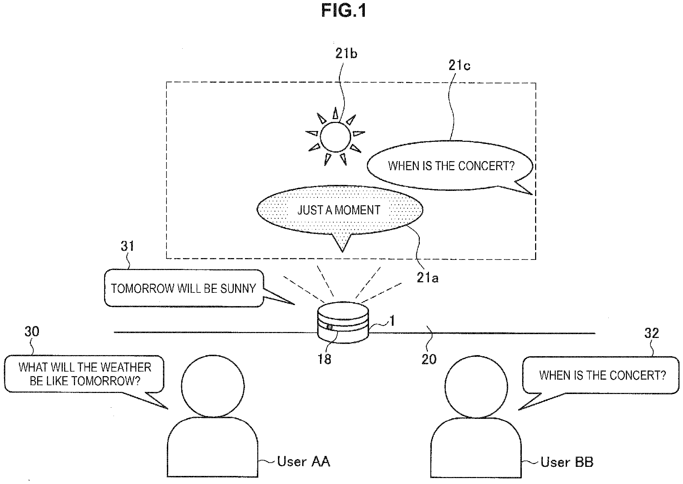

A speech recognition system according to an aspect of the present disclosure has a basic function of performing speech recognition and semantic analysis on a speech from a user and responding by voice. Hereinafter, with reference to FIG. 1, an overview of the speech recognition system according to the aspect of the present disclosure will be described.

FIG. 1 is a diagram illustrating the overview of the speech recognition system according to the aspect of the present disclosure. An information processing device 1 illustrated in FIG. 1 has a voice UI agent function capable of performing speech recognition and semantic analysis on a speech from a user and outputting a response to the user by voice. The appearance of the information processing device 1 is not specifically limited. For example, as illustrated in FIG. 1, the appearance of the information processing device 1 may be a circular cylindrical shape, and the device may be placed on a floor or a table in a room. In addition, the information processing device 1 includes a band-like light emitting unit 18 constituted by light emitting elements such as light-emitting diodes (LEDs) such that the light emitting unit 18 surrounds a central region of a side surface of the information processing device 1 in a horizontal direction. By lighting a part or all of the light emitting unit 18, the information processing device 1 can notifies a user of states of the information processing device 1. For example, by lighting a part of the light emitting unit 18 in a user direction (that is, speaker direction) during conversation with the user, the information processing device 1 can operate as if the information processing device 1 looks on the user as illustrated in FIG. 1. In addition, by controlling the light emitting unit 18 such that the light rotates around the side surface during generating a response or searching for data, the information processing device 1 can notify the user that a process is ongoing.

However, due to its characteristic of responding by outputting voice, the voice UI is conventionally assumed to be used in one-to-one conversation between a system and a user, and the voice UI is not assumed to be used in conversation between the system and a plurality of users. Therefore, for example, when it is assumed that the voice UI system is used in a house or a public space, a certain user is likely to occupy the system.

However, by using the speech recognition system according to an aspect of the present disclosure, it is possible to improve convenience of the speech recognition system by outputting appropriate responses to respective users when the plurality of users are talking.

Specifically, for example, the information processing device 1 has a display function of projecting an image on a wall 20 as illustrated in FIG. 1. The information processing device 1 can output a response by display in addition to outputting a response by voice. Therefore, when another user speaks while the information processing device 1 is outputting a response by voice, the information processing device 1 can output an image displaying wording such as "just a moment" to prompt the another user to stand by. This prevents the information processing device 1 from ignoring a speech from the another user or stopping the response during outputting the response, and this enables the information processing device 1 to operate flexibly.

Specifically, as illustrated in FIG. 1, the information processing device 1 outputs a response 31 "tomorrow will be sunny" by voice in response to a speech 30 "what will the weather be like tomorrow?" from a user AA, and displays a response image 21b indicating an illustration of the sun on the wall 20, for example. In this case, when a speech 32 "when is the concert?" from a user BB is recognized during outputting the response 31 by voice, the information processing device 1 outputs a response image 21a "just a moment" that prompts the user BB to wait his/her turn by display. In addition, in this case, it is also possible for the information processing device 1 to project a speech contents image 21c "when is the concert?" obtained by converting the recognized speech contents of the user BB into text, on the wall 20. Accordingly, the user BB can understand that the speech from the user BB is correctly recognized by the information processing device 1.

Next, after output of a response to the user AA by voice is finished, the information processing device 1 outputs a response to the standby user B by voice. As described above, by using the speech recognition system according to the aspect, it is possible for a plurality of users to use the system at the same time by causing occupation of a voice response output to transition in accordance with order of speeches, for example.

The overview of the speech recognition system according to the present disclosure has been described. Noe that, the shape of the information processing device 1 is not limited to the circular cylindrical shape illustrated in FIG. 1. For example, the shape of the information processing device 1 may be a cube, a sphere, a polyhedron, or the like. Next, a basic configuration and an operation process of the information processing device 1 that implements the speech recognition system according to the aspect of the present disclosure will be described.

### <<2. Basic configuration>>

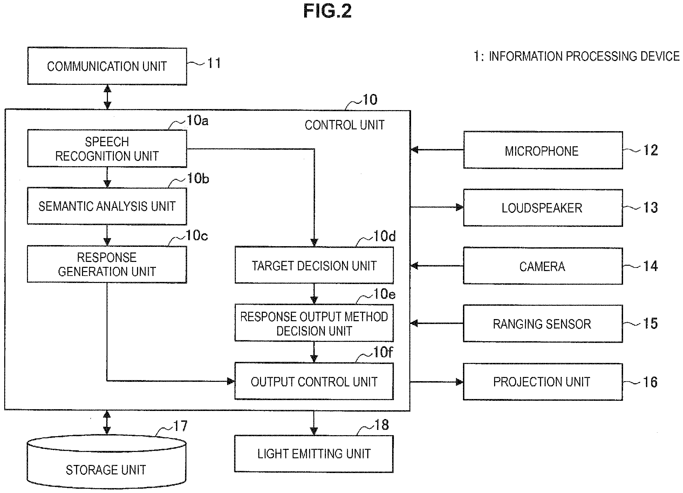

FIG. 2 is a diagram illustrating an example of the configuration of the information processing device 1 according to the aspect. As illustrated in FIG. 2, the information processing device 1 includes a control unit 10, a communication unit 11, a microphone 12, a loudspeaker 13, a camera 14, a ranging sensor 15, a projection unit 16, a storage unit 17, and a light emitting unit 18.

### (Control unit 10)

The control unit 10 controls respective structural elements of the information processing device 1. The control unit 10 is implemented by a microcontroller including a central processing unit (CPU), a read only memory (ROM), a random access memory (RAM), and a non-volatile memory. In addition, as illustrated in FIG. 2, the control unit 10 according to the aspect also functions as a speech recognition unit 10a, a semantic analysis unit 10b, a response generation unit 10c, a target decision unit 10d, a response output method decision unit 10e, and an output control unit 10f.

The speech recognition unit 10a recognizes a voice of a user collected by the microphone 12 of the information processing device 1, converts the voice to a character string, and acquires a speech text. In addition, it is also possible for the speech recognition unit 10a to identify a person who is speaking on the basis of a feature of the voice, and to estimate a voice source (in other words, direction of speaker).

By using natural language processing or the like, the semantic analysis unit 10b performs semantic analysis on the speech text acquired by the speech recognition unit 10a. A result of the semantic analysis is output to the response generation unit 10c.

The response generation unit 10c generates a response to the speech of the user on the basis of the semantic analysis result. For example, in the case where the speech of the user requests "tomorrow's weather", the response generation unit 10c acquires information on "tomorrow's weather" from a weather forecast server on a network, and generates a response.

In the case where the speech recognition unit 10a recognizes speeches from a plurality of users, the target decision unit 10d decides priorities of the respective users on the basis of a predetermined condition, and decides that a user having the highest priority is a target user and the other user(s) are a non-target user(s). The case where the speeches from the plurality of users are recognized means a case where a speech from a second user is recognized while a first user is speaking, or a case where a speech from the second user is recognized during output of a voice response to the speech from the first user. In addition, the priorities of the respective users based on the predetermined condition may be priorities based on order of speeches, for example. Specifically, in the case where a speech from the second user other than the first user who is talking to the device is recognized, the target decision unit 10d sets priorities such that the priority of the first user who starts conversation earlier becomes higher than the priority of the second user who starts conversation later.

In addition, in the case where there is an explicit interrupt process, the target decision unit 10d may reset the priorities such that a non-target user who has interrupted the process is changed to the target user. For example, the explicit interrupt process may be a voice speech of a predetermined command, predetermined gesture operation, a predetermined situation of a user based on sensing data, or the like. Details of the interrupt process will be described later.

The response output method decision unit 10e decides a method for outputting a response to each user on the basis of the priorities of the plurality of users. For example, the response output method decision unit 10e decides that a response is output by voice or a response is output by display in accordance with whether a user is decided as the target user by the target decision unit 10d. Specifically, for example, the response output method decision unit 10e allocates different response output methods to the target user and the non-target user such that the target user occupies the response output using voice and response output using display is allocated to the non-target user. In addition, it is also possible for the response output method decision unit 10e to allocate a part of a display region to the non-target user even in the case where the response output using display is allocated to the target user.

The output control unit 10f performs control such that responses generated by the response generation unit 10c are output in accordance with the response output methods decided by the response output method decision unit 10e. A specific response output example according to the aspect will be described later.

### (Communication unit 11)

The communication unit 11 exchanges data with an external device. For example, the communication unit 11 connects with a predetermined server on a network, and receives information necessary for the response generation unit 10c to generate a response. In addition, the communication unit 11 cooperates with peripheral devices and transmits response data to a target device under the control of the output control unit 10f.

### (Microphone 12)

The microphone 12 has functions of collecting peripheral sounds and outputting the collected sound to the control unit 10 as a sound signal. In addition, the microphone 12 may be implemented by array microphones.

### (Loudspeaker 13)

The loudspeaker 13 has functions of converting the sound signal to a sound and outputting the sound under the control of the output control unit 10f.

### (Camera 14)

The camera 14 has functions of capturing an image of periphery by using an imaging lens included in the information processing device 1, and outputting the captured image to the control unit 10. The camera 14 may be implemented by a 360-degree camera, a wide angle camera, or the like.

### (Ranging sensor 15)

The ranging sensor 15 has a function of measuring distances between the information processing device 1 and a user of the information processing device 1 or people around the user. For example, the ranging sensor 15 may be implemented by an optical sensor (a sensor configured to measure a distance from a target object on the basis of information on phase difference between a light emitting timing and a light receiving timing).

### (Projection unit 16)

The projection unit 16 is an example of a display device, and has a display function of projecting an (enlarged) image on a wall or a screen.

### (Storage unit 17)

The storage unit 17 stores a program for causing the respective structural elements of the information processing device 1 to function. In addition, the storage unit 17 stores various parameters and various algorithms. The various parameters are used when the target decision unit 10d calculates priorities of the plurality of users. The various algorithms are used when the response output method decision unit 10e decides output methods in accordance with the priorities (or in accordance with target/non-target decided on the basis of priorities). In addition, the storage unit 17 stores registration information of users. The registration information of a user includes individual identification information (feature of voice, facial image, feature of person image (including image of body), name, identification number, or the like), age, sex, hobby/preference, an attribute (housewife, office worker, student, or the like), information on a communication terminal held by the user, and the like.

### (Light emitting unit 18)

The light emitting unit 18 may be implemented by light emitting elements such as LEDs, and lighting manners and lighting positions of the light emitting unit 18 are controlled such that all lights are turned on, a part of the light is turned on, or the lights are blinking. For example, under the control of the control unit 10, a part of the light emitting unit 18 in a direction of a speaker recognized by the speech recognition unit 10a is turned on. This enables the information processing device 1 to operate as if the information processing device 1 looks on the direction of the speaker.

The details of the configuration of the information processing device 1 according to the aspect have been described. Note that, the configuration illustrated in FIG. 2 is a mare example, and the aspect is not limited thereto. For example, the information processing device 1 may further include an infrared (IR) camera, a depth camera, a stereo camera, a motion detector, or the like to acquire information on a surrounding environment. In addition, installation positions of the microphone 12, the loudspeaker 13, the camera 14, the light emitting unit 18, and the like in the information processing device 1 are not specifically limited. In addition, the respective functions of the control unit 10 according to the embodiment may be in a cloud connected via the communication unit 11.

### <<3. Operation Process>>

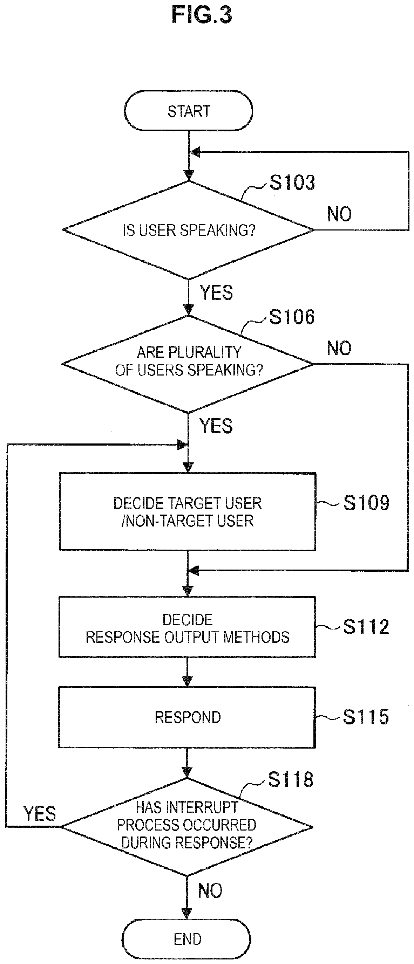

Next, with reference to FIG. 3, details of an operation process of the speech recognition system according to the embodiment will be described.

FIG. 3 is a flowchart illustrating the operation process of the speech recognition system according to the embodiment. As illustrated in FIG. 3, the control unit 10 of the information processing device 1 first determines whether a user is speaking in Step S103. Specifically, the control unit 10 performs speech recognition on a sound signal collected by the microphone 12 by using the speech recognition unit 10a, performs semantic analysis on the sound signal by using the semantic analysis unit 10b, and determines whether the sound signal is a speech from the user who is talking to the system.

Next, in Step S106, the control unit 10 determines whether a plurality of users are speaking. Specifically, the control unit 10 can determine whether two or more users are speaking on the basis of user (speaker) identification performed by the speech recognition unit 10a.

Next, in the case where the plurality of user are not speaking (in other words, a single user is speaking) (NO in S106), the response output method decision unit 10e in the control unit 10 decides to use a voice response output method (S112), and the output control unit 10f outputs a response generated by the response generation unit 10c by voice (S115).

On the other hand, in the case where the plurality of users are speaking (YES in S106), the target decision unit 10d in the control unit 10 decides a target user and a non-target user on the basis of priorities of the respective users in Step S109. For example, the target decision unit 10d decides that a first user who has spoken first is a target user by increasing the priority of the first user, and decides that a second user who has spoken later is the non-target user by decreasing the priority of the second user in comparison with the priority of the first user.

Next, in Step S112, the response output method decision unit 10e decides response output methods in accordance with the target/non-target decided by the target decision unit 10d. For example, the response output method decision unit 10e decides that the response output method using voice is allocated to the target user (in other words, target user occupies voice response output method), and decides that the response output method using display is allocated to the non-target user.

Next, in Step S115, the output control unit 10f performs control such that responses to speeches from the respective users generated by the response generation unit 10c in accordance with a result of semantic analysis performed on the speeches by the semantic analysis unit 10b are output by using the respective output methods decided by the response output method decision unit 10e. Accordingly, for example, in the case where the second user speaks during output of a response to the speech of the first user by voice, the output control unit 10f can continue outputting the response without stopping the response. This is because the first user is decided to be the target user and the first user can occupy the voice output method. In addition, since the second user who has spoken during the speech from the first user is decided to be the non-target user and the display output method is allocated to the second user, it is possible for the output control unit 10f to output a response to the second user by display while outputting the response to the first user by voice. Specifically, the output control unit 10f outputs the response to the second user by display, the response instructing the second user to wait his/her turn. After the response to the first user by voice finishes, the output control unit 10f outputs the response to the second user by voice. This is because, when the response to the first user by voice finishes, the priority of the second user increases, the second user becomes the target user, and the second user can occupy the voice response output. Alternatively, in the case where there is only one standby user when the response to the first user by voice finishes, the system is used in a one-to-one manner. Therefore, the response output method decision unit 10e performs control such that the single user occupies the voice response output.

As described above, by using the voice UI system according to the aspect, it is possible to flexibly respond to speeches from a plurality of user, which improves convenience of the voice UI system. Note that, a specific example of outputting responses to the plurality of users according to the embodiment will be described later.

Last of all, in the case where an explicit interrupt process has occurred during the response in Step S118 (YES in S118), the target decision unit 10d in the control unit 10 changes the targets/non-target with respect to the plurality of users (S109). Specifically, the target decision unit 10d increases the priority of an interrupting user in comparison with a current target user, decides the interrupting user as the target user, and changes the current target user to be a non-target user. Next, the control unit 10 controls the response such that the response output method is switched to a response output method that is re-decided in accordance with the change (S112 and S115). Examples of the explicit interrupt process include processes using voice, gesture, and the like as described later.

For example, a priority of an interrupting user is increased in the voice interrupt process in the case where a system name is spoken such that "SS (system name), what's the weather like?", in the case where a predetermined interrupt command is spoken such that "interrupt: what's the weather like?", or in the case where wording indicating that the user is in hurry or indicating an important request is spoken such that "what's the weather like? Hurry up!" Alternatively, the priority of the interrupting user is also increased in the case where the interrupting user speaks louder than his/her usual voice volume (or general voice volume) or the interrupting user speaks fast, since it is determined that it is an explicit interrupt process.

Alternatively, the priority of the interrupting user is also increased in the case where the interrupting user speaks with a predetermined gesture such as raising his/her hand as the gesture interrupt process.

In addition, as an interrupt process using a remote controller or a hardware (HW) button, an interrupt process function may be attached to a physical button provided on the information processing device 1 or a remote controller by which the information processing device 1 is operated.

Alternatively, as an interrupt process according to contents of environmental sensing, an explicit interrupt process may be determined on the basis of contents detected by the camera 14, the ranging sensor 15, or the like. As an example, it is determined that there is an explicit interrupt process and a priority of a user is increased in the case where it is sensed that the user is in hurry (for example, the user is approaching the information processing device 1 in hurry), or in the case where the user speaks to the information processing device 1 at a position closer to the information processing device 1 than the current target user. Alternatively, it can be determined that there is an explicit interrupt process and a priority of a user can be increased in the case where schedule information of a target user is acquired from a predetermined server or the like, and it is found that an interrupting user has a plan right after now.

The explicit interrupt processes have been described above. However, according to the aspect, it is also possible to perform an interrupt process according to an attitude of a target user in addition to the above described interrupt process. In other words, in the case where it is possible for the information processing device 1 to identify speakers, static or dynamic priorities are allocated to the respective users. Specifically, for example, in the case where the user AA is registered as a "son", the user BB is registered as a "mother", and the priority of the "mother" is set to be higher than the priority of the "son", the priority of the user BB is controlled such that the priority of the user BB is increased in comparison with the priority of the user BB when the user BB interrupts the conversation between the information processing device 1 and the user AA. Accordingly, the response to the user AA is switched from the voice output to the display output.

### <<4. Response output example>>

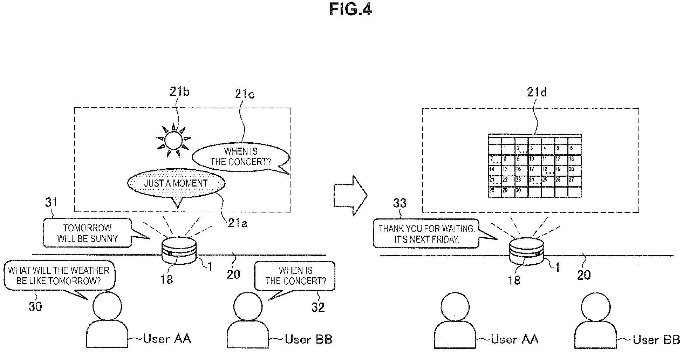

Next, with reference to FIG. 4 to FIG. 8, details of an example of outputting responses to a plurality of users according to the embodiment will be described.

### <4-1. Responses by voice and display>

FIG. 4 is a diagram illustrating examples of outputting responses by voice and display to speeches from a plurality of users at the same time according to the embodiment. As illustrated in the left side of FIG. 4, in the case where the information processing device 1 recognizes a speech 32 from the user BB while outputting a response 31 by voice to a speech 30 from the user AA, the information processing device 1 decides the user AA who starts conversation first as a target user and continues outputting voice of the response 31. On the other hand, the information processing device 1 decides the user BB who starts conversation later as a non-target user, and outputs display of a response image 21a that prompts the user BB to stand by.

Next, after output of the response to the user AA by voice is finished, the information processing device 1 outputs a response 33 "Thank you for waiting. It's next Friday" to the standby user B by voice as illustrated in the right side of FIG. 4. In addition, if necessary, the information processing device 1 can outputs display by projecting a response image 21d on the wall 20. In addition, to explicitly show that the occupation of the voice response output is transitioned to the user BB, the information processing device 1 may be controlled such that a part of the light emitting unit 18 in a direction of the user BB is turned on as if the information processing device 1 looks on the user BB, as illustrated in the right side of FIG. 4.

As described above, by using the speech recognition system according to the embodiment, it is possible for a plurality of users to use the system at the same time by causing occupation of a voice response output to transition in accordance with order of speeches from the users. Noe that, the way of instructing the non-target user to stand by is not limited to the projection of the response image 21a as illustrated in FIG. 4. Next, modifications of the instructions will be described.

### (Modification 1)

For example, in the case where the target user also occupies the display response output, the information processing device 1 can output the stand-by instruction to the non-target user by using a sub-display or the light emitting unit 18 provided on the information processing device 1.

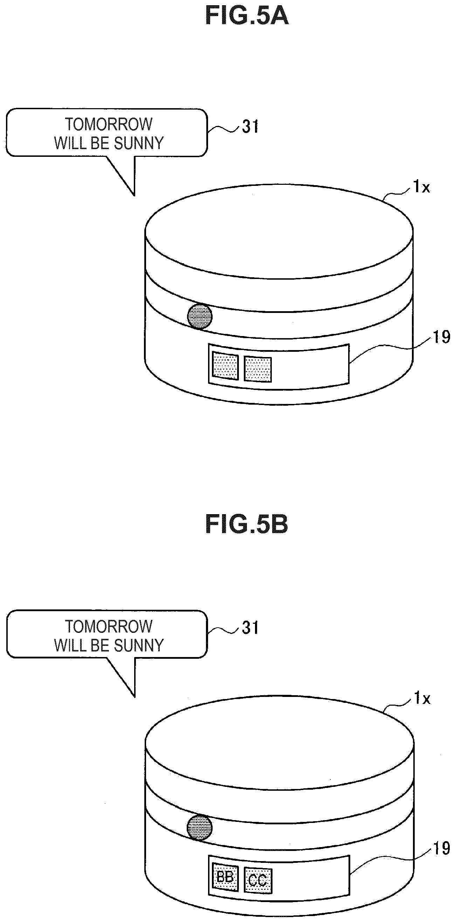

Alternatively, in the case where a display area or a display function of the sub-display or the light emitting unit 18 is limited, the information processing device 1 can output the stand-by instruction by using an icon or color information of light. Next, with reference to FIG. 5A and FIG. 5B, notification to a stand-by user by using the sub-display will be described.

For example, in the case of an information processing device 1x including a sub-display 19 on the side surface as illustrated in FIG. 5A, the output control unit 10f can visualize non-target users who are currently waiting for responses, as queues. In the example illustrated in FIG. 5A it is possible to intuitively recognize that currently two people are waiting for responses.

Alternatively, in the case of the information processing device 1x including the sub-display 19 on the side surface as illustrated in FIG. 5B, the output control unit 10f can clearly display IDs or names of the users with registered colors of the target users to visualize non-target users who are currently waiting for responses as queues. In the example illustrated in FIG. 5B, it is possible to intuitively recognize that currently who is waiting for a response.

### (Modification 2)

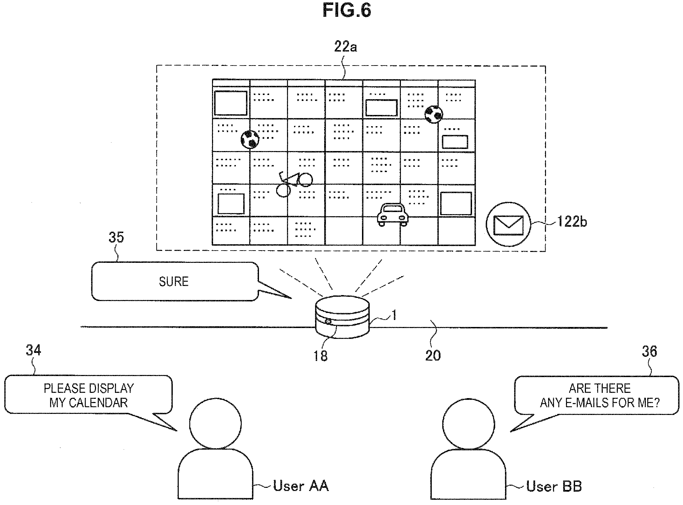

Alternatively, in the case where a certain amount of display region is necessary for each of the responses to the plurality of users, the display regions of the information processing device 1 are run out. In such a case, the information processing device 1 saves the display region by displaying a response to a user with low priority (in other words, response to non-target user) as an icon or text. FIG. 6 is a diagram illustrating an example of saving a display region by displaying an icon indicating a response to a non-target user. As illustrated in FIG. 6, the information processing device 1 that has recognized a speech 34 "please display my calendar" from the user AA outputs a response 35 "sure", and projects a corresponding calendar image 22a on the wall 20.

In this case, a large part of the display region 200 is used since the calendar image 22a has a large amount of information. Therefore, in the case where a speech 36 "are there any e-mails for me?" from the user BB is recognized during displaying the calendar, it is impossible to allow a space for displaying the response image 21a and the speech contents image 21c as illustrated in FIG. 4. Therefore, the information processing device 1 displays an icon image 22b of the e-mail as illustrated in FIG. 6. Thereby, the user B can intuitively understand that his/ her speech is recognized correctly and he/she is in a response waiting state.

The example of the response with regard to notification instructing the non-target user to stand by according to the embodiment has been described. Note that, it is also possible to combine the modification 1 and the modification 2.

### <4-2. Simultaneous response using directivity>

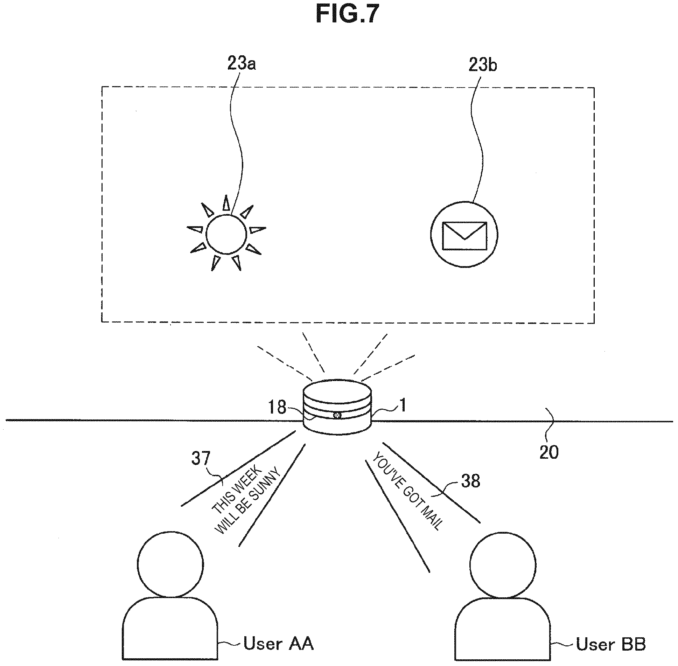

Next, in the case where the loudspeaker 13 has directivity and it is possible to generate a sound field at a specific position such as wavefront synthesis, the information processing device 1 can output responses to the plurality of users by voice at the same time. FIG. 7 is a diagram illustrating simultaneous responses using directional voices.

As illustrated in FIG. 7, the information processing device 1 recognizes positions of respective speakers by using contents sensed by the camera 14 and the microphone 12, outputs voice of a response 37 to the user AA and voice of a response 38 to the user BB towards the respective positions of the users, and outputs the responses at the same time. In this case, it is also possible for the information processing device 1 to divide the display region, allocate display areas to the respective users, and display a response image 23a to the user AA and a response image 23b to the user BB. In addition, the information processing device 1 may enlarge the display region for the target user in comparison with the display region for the non-target user.

As described above, by using the speech recognition system according to the aspect, it is possible to respond to a plurality of users by using directive voices at the same time, and allow the plurality of users to use the system at the same time.

### <4-3. Response through cooperation with external device>

Alternatively, it is also possible for the information processing device 1 to cooperate with an external device and perform control such that the external device outputs a response to the non-target user. For example, in the case where the target user is occupying the voice response output and the display response output, the information processing device 1 performs control such that a response to the non-target user is output from a mobile communication terminal and a wearable terminal that are held by the non-target user, a TV in the vicinity or in his/her own room, another voice UI system in another place, or the like. In this case, the information processing device 1 may display information on the sub-display provided on the information processing device a, the information indicating that the external device outputs a response. Alternatively, the information processing device 1 may cause the mobile communication terminal or the wearable terminal to output voice such as "a response will be output from here". This enables the non-target user to be notified of the terminal from which the response is to be output.

As described above, by using the speech recognition system according to the embodiment, it is possible to respond to a plurality of users at the same time by cooperating with the external device, and allow the plurality of users to use the system at the same time.

### <4-4. Response according to state of speaker>

In addition, by using the information processing device 1 according to the aspect, it is also possible to decide a response output method in accordance with a state of a speaker. For example, in the case where a user is not near the information processing device 1 and the user speaks loudly in a position a little bit away from the information processing device 1, there is a possibility that the output of the voice or display from the information processing device 1 cannot be conveyed to the user. Therefore, the information processing device 1 may decide to use a response output method by which the information processing device 1 cooperates with an external device such as a mobile communication terminal, a wearable device, or the like held by a user. Alternatively, it is also possible to cause the information processing device 1 to temporarily store response contents, and cause the information processing device 1 to output the response contents in the case where the user moves to a voice/display output effective range of the information processing device 1.

Accordingly, for example, it is possible to avoid voice output or display output of the information processing device 1 to be occupied in the case where a target user who has spoken first is in a position away from the information processing device 1. The voice output or the display output can be allocated to a non-target user in proximity.

### <4-5. Response according to contents of speech>

In addition, by using the information processing device 1 according to the aspect, it is also possible to decide a response output method in accordance with response contents. For example, in the case where a response has a large amount of information such as calendar display, the information processing device 1 preferentially allocate a display output method to such a response, and allows another user to use a voice output method. Alternatively, in the case of simple confirmation (for example, the information processing device 1 outputs a simple response "no" to a speech "is the Yamanote Line is delayed?" from a user), the response is output by voice and image display is not necessary. The information processing device 1 allows another user to use the display output method. Alternatively, in the case where the speech from the user merely includes an instruction with regard to display such as "please display my calendar", it is also possible for the information processing device 1 to allow another user to use the voice output method.

As described above, by preferentially allocating a necessary response output method in accordance with contents of a speech from a user and allowing another user to use another response output method, it is possible to avoid the target user from occupying all of the display output and voice output, and it is possible for the plurality of users to use the system at the same time.

### <4-6. Error response>

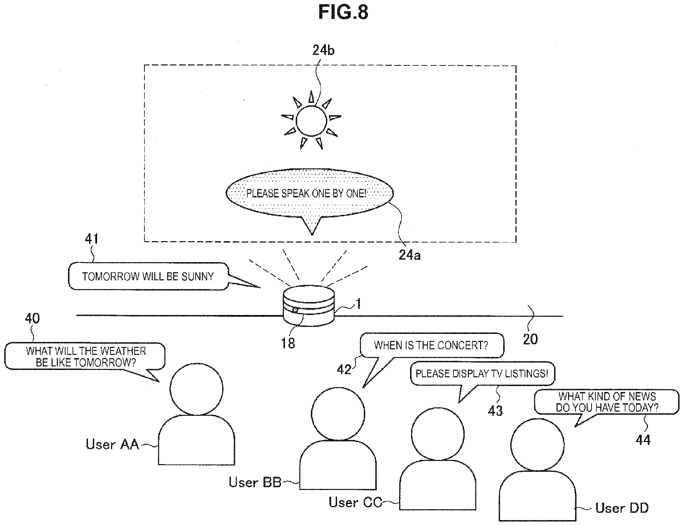

In addition, in the case where the number of speakers speaking at the same time exceeds the allowable number of speakers speaking at the same time, the information processing device 1 according to the aspect may display an error. Hereinafter, an example of the error display will be described with reference to FIG. 8.

FIG. 8 is a diagram illustrating an example of the error display according to the aspect. As illustrated in FIG. 8, first, the information processing device 1 that has recognized a speech 40 from the user AA outputs a response 41 by voice and projects a response image 24d. During the response, an error image 24a is projected as illustrated in FIG. 8 in the case where the user BB speaks a speech 42 "When is the concert?", a user CC speaks a speech 43 "please display TV listings!", a user DD speaks a speech 44 "what kind of news do you have today?", and the number of speakers exceeds the number of simultaneous speakers allowed by the information processing device 1 (for example, two people).

The error image 24a may include a content that prompts a user to take measures to avoid the error such as "please speak one by one!" Therefore, the user BB, the user CC, and the user DD can understand that the error disappears when they speak one by one.

Note that, in the case where the cause for the error is limitation of the display region, the information processing device 1 may transfer the response contents to a device or the like associated with each of non-target users.

### <<5. Conclusion>>

As described above, by using the speech recognition system according to the aspect of the present disclosure, it is possible for a plurality of users to use the system at the same time and improve convenience of the speech recognition system by causing occupation of a voice response output to transition in accordance with order of speeches, for example.

The preferred aspect(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, it is also possible to create a computer program for causing hardware such as a CPU, a ROM, and a RAM, which are embedded in the above described information processing device 1, to execute the above-described functions of the information processing device 1. Moreover, it may be possible to provide a computer-readable recording medium having the computer program stored therein.

### Reference Signs List

- 1: information processing device
- 10: control unit
- 10a: speech recognition unit
- 10b: semantic analysis unit
- 10c: response generation unit
- 10d: target decision unit
- 10e: response output method decision unit
- 10f: output control unit
- 11: communication unit
- 12: microphone
- 13: loudspeaker
- 14: camera
- 15: ranging sensor
- 16: projection unit
- 17: storage unit
- 18: light emitting unit
- 19: sub-display
- 20: wall

## Claims

1. An information processing device (1) comprising:
a speech recognition unit (10a) configured to perform speech recognition on respective speeches from a plurality of users;
a response generation unit (10c) configured to generate responses to speeches from a plurality of users, wherein the response generation unit (10c):
generates a response indicating an answer to a speech from a user and a response that prompts another user to wait for output of an answer, on the basis of priorities according to order of the speeches from the plurality of users; and
generates a response that prompts the non-target user to stand by, the response indicating a result of speech recognition performed on a speech from the non-target user;
a decision unit (10e) configured to decide methods of outputting the responses to the respective users on the basis of priorities according to order of the speeches from the plurality of users, wherein the decision unit (10e):
decides a user having the highest priority as a target user, and decides each of the other one or more users as a non-target user; and
causes the target user to occupy a response output method using voice, and allocates a response output method using display to the non-target user; and
an output control unit (10f) configured to perform control such that the generated responses are output by using the decided methods of outputting the responses, wherein the output control unit (10f) performs control such that:
a response indicating an answer to a speech of the another user who is standing by is output after the response to the speech from the user finishes; and
an image of a response that prompts the non-target user to stand by is displayed, indicating the result of speech recognition performed on the speech from the non-target user is displayed.

2. The information processing device (1) according to claim 1,
wherein the output control unit (10f) performs control such that a response indicating an answer to a speech from a user and an application icon related to a speech recognition result of a user who is waiting for output of an answer are output.

3. The information processing device (1) according to claim 1,
wherein the output control unit (10f) performs control such that the non-target user waiting for a response is explicitly shown.

4. The information processing device (1) according to claim 1,
wherein, after conversation with the target user finishes, the decision unit (10e) causes the response output method using voice that has been occupied by the target user to transition to the non-target user.

5. The information processing device (1) according to claim 1,
wherein the response output using display is display through projection.

6. The information processing device (1) according to claim 1,
wherein, in the case where the target user occupies the output method using display and the output method using voice, the decision unit (10e) allocates a method of outputting a response through cooperation with an external device to the non-target user.

7. The information processing device (1) according to claim 1,
wherein the decision unit (10e) allocates:
a response output method that is different from a response output method decided in accordance with contents of a response to the target user, to the non-target user; or
a method of outputting a response from a directional sound output unit to a plurality of users.

8. The information processing device (1) according to claim 7,
wherein, in the case where the method of outputting a response to the target user occupies display, the decision unit (10e) allocates the outputting method using voice to the non-target user.

9. The information processing device (1) according to claim 1,
wherein, in the case where the target user is in a position away from the information processing device (1) by a predetermined value or more, the decision unit (10e) allocates a method of outputting a response through cooperation with an external device.

10. A control method comprising, by a processor:
performing speech recognition on respective speeches from a plurality of users;
generating a response indicating an answer to a speech from a user and a response that prompts another user to wait for output of an answer, with respect to speeches from a plurality of users, wherein:
a response is generated indicating an answer to a speech from a user and a response that prompts another user to wait for output of an answer, on the basis of priorities according to order of the speeches from the plurality of users; and
a response is generated that prompts the non-target user to stand by, the response indicating a result of speech recognition performed on a speech from the non-target user;
deciding methods of outputting the responses to the respective users on the basis of priorities according to order of the speeches from the plurality of users, wherein:
a user having the highest priority is decided as a target user, and each of the other one or more users are decided as a non-target user; and
the target user is caused to occupy a response output method using voice, and a response output method is allocated using display to the non-target user; and
performing control, by an output control unit (10f), such that the generated responses are output by using the decided methods of outputting the responses, wherein control is performed such that:
a response indicating an answer to a speech of the another user who is standing by is output after the response to the speech from the user finishes; and
an image of a response that prompts the non-target user to stand by is displayed, indicating the result of speech recognition performed on the speech from the non-target user is displayed.

11. A program comprising instructions which, when executed by a computer, cause the computer to carry out the method according to claim 10.

## Patentansprüche

1. Informationsverarbeitungseinrichtung (1), umfassend:
eine Spracherkennungseinheit (10a), ausgelegt zum Durchführen von Spracherkennung an entsprechenden Spracheingaben einer Mehrzahl von Benutzern;
eine Antworterzeugungseinheit (10c), ausgelegt zum Erzeugen von Antworten auf Spracheingaben einer Mehrzahl von Benutzern, wobei die Antworterzeugungseinheit (10c)
eine Antwort erzeugt, die eine Antwort auf eine Spracheingabe eines Benutzers angibt, und eine Antwort, die einen anderen Benutzer auffordert, auf die Ausgabe einer Antwort zu warten, basierend auf Prioritäten entsprechend der Reihenfolge der Spracheingaben der Mehrzahl von Benutzern; und
eine Antwort erzeugt, die den Nicht-Zielbenutzer auffordert, zu warten, wobei die Antwort ein Ergebnis von Spracherkennung angibt, durchgeführt an einer Spracheingabe des Nicht-Zielbenutzers;
eine Entscheidungseinheit (10e), ausgelegt zum Bestimmen von Methoden der Ausgabe der Antworten zu den jeweiligen Benutzern auf der Basis von Prioritäten entsprechend der Reihenfolge der Spracheingaben der Mehrzahl von Benutzern, wobei die Entscheidungseinheit (10e)
einen Benutzer, der die höchste Priorität aufweist, als einen Zielbenutzer festlegt und jeden der anderen ein oder mehreren Benutzer als einen Nicht-Zielbenutzer festlegt; und
den Zielbenutzer veranlasst, ein Antwortausgabeverfahren unter Verwendung von Stimme einzusetzen und dem Nicht-Zielbenutzer ein Antwortausgabeverfahren unter Verwendung von Anzeige zuweist; und
eine Ausgabesteuerungseinheit (10f), ausgelegt zum Durchführen von Steuerung, sodass die erzeugten Antworten unter Verwendung der festgelegten Verfahren der Antwortausgabe ausgegeben werden, wobei die Ausgabesteuerungseinheit (10f) Steuerung durchführt, sodass
eine Antwort ausgegeben wird, die eine Antwort auf eine Spracheingabe eines anderen Benutzers, der im Wartezustand ist, angibt, nachdem die Antwort auf die Spracheingabe des Benutzers beendet ist; und
ein Bild einer Antwort angezeigt wird, das den Nicht-Zielbenutzer auffordert, abzuwarten, wobei die Angabe des Ergebnisses von an der Spracheingabe des Nicht-Zielbenutzers durchgeführter Spracherkennung angezeigt wird.

2. Informationsverarbeitungseinrichtung (1) nach Anspruch 1,
wobei die Ausgabesteuerungseinheit (10f) Steuerung durchführt, sodass eine Antwort, die eine Antwort auf eine Spracheingabe eines Benutzers angibt, und ein Anwendungssymbol mit Bezug auf ein Spracherkennungsergebnis eines Benutzers, der auf die Ausgabe einer Antwort wartet, ausgegeben werden.

3. Informationsverarbeitungseinrichtung (1) nach Anspruch 1,
wobei die Ausgabesteuerungseinheit (10f) Steuerung durchführt, sodass der Nicht-Zielbenutzer, der auf eine Antwort wartet, explizit angezeigt wird.

4. Informationsverarbeitungseinrichtung (1) nach Anspruch 1,
wobei die Entscheidungseinheit (10e) nach Beendigung der Konversation mit dem Zielbenutzer das Antwortausgabeverfahren unter Verwendung von Stimme, die durch den Zielbenutzer eingesetzt worden ist, veranlasst, zu dem Nicht-Zielbenutzer überzugehen.

5. Informationsverarbeitungseinrichtung (1) nach Anspruch 1,
wobei die Antwortausgabe unter Verwendung von Anzeige mittels Projektion angezeigt wird.

6. Informationsverarbeitungseinrichtung (1) nach Anspruch 1,
wobei für den Fall, dass der Zielbenutzer das Ausgabeverfahren unter Verwendung von Anzeige und das Ausgabeverfahren unter Verwendung von Stimme einsetzt, die Entscheidungseinheit (10e) dem Nicht-Zielbenutzer ein Verfahren der Ausgabe einer Antwort durch Kooperation mit einer externen Einrichtung zuweist.

7. Informationsverarbeitungseinrichtung (1) nach Anspruch 1,
wobei die Entscheidungseinheit (10e) zuweist:
ein Antwortausgabeverfahren, das sich von einem Antwortausgabeverfahren unterscheidet, das für den Nicht-Zielbenutzer entsprechend dem Inhalt einer Antwort an den Zielbenutzer festgelegt worden ist; oder
ein Verfahren der Ausgabe einer Antwort von einer direktionalen Schallausgabeeinheit zu einer Mehrzahl von Benutzern.

8. Informationsverarbeitungseinrichtung (1) nach Anspruch 7,
wobei für den Fall, dass das Verfahren der Ausgabe einer Antwort an den Zielbenutzer Anzeige einsetzt, die Entscheidungseinheit (10e) für den Nicht-Zielbenutzer das Ausgabeverfahren unter Verwendung von Stimme zuweist.

9. Informationsverarbeitungseinrichtung (1) nach Anspruch 1,
wobei für den Fall, dass der Zielbenutzer in einer von der Informationsverarbeitungseinrichtung (1) um einen vorbestimmten Wert oder weiter entfernten Position ist, die Entscheidungseinheit (10e) ein Verfahren der Ausgabe einer Antwort durch Kooperation mit einer externen Einrichtung zuweist.

10. Steuerungsverfahren, umfassend, mittels eines Prozessors:
Durchführen von Spracherkennung an entsprechenden Spracheingaben einer Mehrzahl von Benutzern;
Erzeugen einer Antwort, die eine Antwort auf eine Spracheingabe eines Benutzers angibt, und einer Antwort, die einen anderen Benutzer auffordert, auf die Ausgabe einer Antwort mit Bezug auf Spracheingaben einer Mehrzahl von Benutzern zu warten; wobei
eine Antwort erzeugt wird, die eine Antwort auf eine Spracheingabe eines Benutzers angibt, und eine Antwort, die einen anderen Benutzer auffordert, auf die Ausgabe einer Antwort zu warten, basierend auf Prioritäten entsprechend der Reihenfolge der Spracheingaben der Mehrzahl von Benutzern; und
eine Antwort erzeugt wird, die den Nicht-Zielbenutzer auffordert, zu warten, wobei die Antwort ein Ergebnis von Spracherkennung angibt, durchgeführt an einer Spracheingabe des Nicht-Zielbenutzers;
Entscheidungsverfahren der Ausgabe der Antworten zu den jeweiligen Benutzern auf der Basis von Prioritäten entsprechend der Reihenfolge der Spracheingaben der Mehrzahl von Benutzern, wobei
ein Benutzer, der die höchste Priorität aufweist, als ein Zielbenutzer festgelegt wird und jeder der anderen ein oder mehreren Benutzer als ein Nicht-Zielbenutzer festgelegt wird; und
der Zielbenutzer veranlasst wird, ein Antwortausgabeverfahren unter Verwendung von Stimme einzusetzen, und dem Nicht-Zielbenutzer ein Antwortausgabeverfahren unter Verwendung von Anzeige zugewiesen wird; und
Durchführen von Steuerung durch eine Ausgabesteuerungseinheit (10f), sodass die erzeugten Antworten unter Verwendung der festgelegten Verfahren der Antwortausgabe ausgegeben werden, wobei die Steuerung derart durchgeführt wird, dass
eine Antwort ausgegeben wird, die eine Antwort auf eine Spracheingabe eines anderen Benutzers, der im Wartezustand ist, angibt, nachdem die Antwort auf die Spracheingabe des Benutzers beendet ist; und
ein Bild einer Antwort angezeigt wird, das den Nicht-Zielbenutzer auffordert, abzuwarten, wobei die Angabe des Ergebnisses von an der Spracheingabe des Nicht-Zielbenutzers durchgeführter Spracherkennung angezeigt wird.

11. Programm, umfassend Anweisungen, die bei Ausführung durch einen Rechner den Rechner veranlassen, das Verfahren nach Anspruch 10 durchzuführen.

## Revendications

1. Dispositif de traitement d'informations (1) comprenant :
une unité de reconnaissance vocale (10a) configurée pour exécuter une reconnaissance vocale sur des discours respectifs provenant d'une pluralité d'utilisateurs ;
une unité de génération de réponse (10c) configurée pour générer des réponses aux discours provenant d'une pluralité d'utilisateurs, dans lequel l'unité de génération de réponse (10c) :
génère une réponse indiquant une réponse à un discours provenant d'un utilisateur et une réponse qui invite un autre utilisateur à attendre pour émettre une réponse, sur la base des priorités en fonction d'un ordre des discours provenant de la pluralité des utilisateurs ; et
génère une réponse qui invite l'utilisateur non cible à attendre, la réponse indiquant un résultat de reconnaissance vocale exécuté sur un discours provenant de l'utilisateur non cible ;
une unité de décision (10e) configurée pour décider des procédés d'émission des réponses aux utilisateurs respectifs sur la base des priorités en fonction de l'ordre des discours provenant de la pluralité des utilisateurs, dans lequel l'unité de décision (10e) :
décide qu'un utilisateur ayant la priorité la plus élevée soit un utilisateur cible, et décide que chaque autre ou autres utilisateurs soit un utilisateur non cible ; et
amène l'utilisateur cible à occuper un procédé d'émission de réponse utilisant la voix, et attribue un procédé d'émission de réponse utilisant un dispositif d'affichage à l'utilisateur non cible ; et
une unité de commande d'émission (10f) configurée pour exécuter une commande de sorte que les réponses générées sont émises en utilisant les procédés décidés d'émission des réponses, dans lequel l'unité de commande d'émission (10f) exécute une commande de sorte que :
une réponse indiquant une réponse à un discours de l'autre utilisateur qui attend est émise après que la réponse au discours provenant de l'utilisateur se termine ; et
une image d'une réponse qui invite l'utilisateur non cible à attendre est affichée, indiquant que le résultat de reconnaissance vocale exécuté sur le discours provenant de l'utilisateur non cible est affiché.

2. Dispositif de traitement d'informations (1) selon la revendication 1,
dans lequel l'unité de commande d'émission (10f) exécute une commande de sorte qu'une réponse indiquant une réponse à un discours provenant d'un utilisateur et qu'une icône d'application associée à un résultat de reconnaissance vocale d'un utilisateur qui attend pour l'émission d'une réponse sont émises.

3. Dispositif de traitement d'informations (1) selon la revendication 1,
dans lequel l'unité de commande d'émission (10f) exécute une commande de sorte que l'utilisateur non cible attendant une réponse est montré explicitement.

4. Dispositif de traitement d'informations (1) selon la revendication 1,
dans lequel, après qu'une conversation avec l'utilisateur cible se termine, l'unité de décision (10e) amène le procédé d'émission de réponse utilisant la voix qui a été occupé par l'utilisateur cible à passer à l'utilisateur non cible.

5. Dispositif de traitement d'informations (1) selon la revendication 1,
dans lequel l'émission de réponse utilisant un dispositif d'affichage est affichée par le biais d'une projection.

6. Dispositif de traitement d'informations (1) selon la revendication 1,
dans lequel, au cas où l'utilisateur cible occupe le procédé d'émission utilisant le dispositif d'affichage et le procédé d'émission utilisant la voix, l'unité de décision (10e) attribue un procédé d'émission d'une réponse par le biais d'une coopération avec un dispositif externe à l'utilisateur non cible.

7. Dispositif de traitement d'informations (1) selon la revendication 1,
dans lequel l'unité de décision (10e) attribue :
un procédé d'émission de réponse qui est différent d'un procédé d'émission de réponse décidé en fonction des contenus d'une réponse à l'utilisateur cible, à l'utilisateur non cible ; ou
un procédé d'émission d'une réponse provenant d'une unité d'émission sonore directionnelle à une pluralité d'utilisateurs.

8. Dispositif de traitement d'informations (1) selon la revendication 7,
dans lequel, au cas où le procédé d'émission d'une réponse à l'utilisateur cible occupe un dispositif d'affichage, l'unité de décision (10e) attribue le procédé d'émission utilisant la voix à l'utilisateur non cible.

9. Dispositif de traitement d'informations (1) selon la revendication 1,
dans lequel, au cas où l'utilisateur cible se trouve dans une position éloignée du dispositif de traitement d'informations (1) par une valeur prédéterminée ou plus, l'unité de décision (10e) attribue un procédé d'émission d'une réponse par le biais d'une coopération avec un dispositif externe.

10. Procédé de commande comprenant, par un processeur :
l'exécution d'une reconnaissance vocale sur des discours respectifs provenant d'une pluralité d'utilisateurs ;
la génération d'une réponse indiquant une réponse à un discours provenant d'un utilisateur et une réponse qui invite un autre utilisateur à attendre pour émettre une réponse, par rapport aux discours provenant d'une pluralité d'utilisateurs, dans lequel :
une réponse est générée indiquant une réponse à un discours provenant d'un utilisateur et une réponse qui invite un autre utilisateur à attendre pour émettre une réponse, sur la base des priorités en fonction d'un ordre des discours provenant de la pluralité d'utilisateurs ; et
une réponse est générée qui invite l'utilisateur non cible à attendre, la réponse indiquant un résultat de reconnaissance vocale exécuté sur un discours provenant de l'utilisateur non cible ;
la décision de procédés d'émission des réponses aux utilisateurs respectifs sur la base des priorités en fonction d'un ordre des discours provenant de la pluralité des utilisateurs, dans lequel :
on décide qu'un utilisateur ayant la priorité la plus élevée soit un utilisateur cible, et on décide que chaque autre ou autres utilisateurs soit un utilisateur non cible ; et
l'utilisateur cible est amené à occuper un procédé d'émission de réponse utilisant la voix, et un procédé d'émission de réponse est attribué utilisant le dispositif d'affichage à l'utilisateur non cible ; et
l'exécution d'une commande, par une unité de commande d'émission (10f), de sorte que les réponses générées sont émises en utilisant les procédés décidés d'émission des réponses, dans lequel une commande est exécutée de sorte que :
une réponse indiquant une réponse à un discours de l'autre utilisateur qui attend est émise après que la réponse au discours provenant de l'utilisateur se termine ; et
une image d'une réponse qui invite l'utilisateur non cible à attendre est affichée, indiquant que le résultat de reconnaissance vocale exécuté sur le discours provenant de l'utilisateur non cible est affiché.

11. Programme comprenant des instructions qui, lorsqu'elles sont exécutées par un ordinateur, amènent l'ordinateur à mettre en œuvre le procédé selon la revendication 10.
